# EUROPÄISCHE PATENTSCHRIFT

(11) **EP 2 528 763 B1**
(45) Veröffentlichungstag und Bekanntmachung des Hinweises auf die Patenterteilung: **03.09.2014**
(21) Anmeldenummer: 11701020.7
(22) Anmeldetag: 24.01.2011
(51) Int. Cl.: B60K 11/08, B60R 21/34

(54) **VORDERWAGEN EINES FAHRZEUGS**
FRONT END OF A VEHICLE
PARTIE AVANT D'UN VÉHICULE

(30) Priorität: 30.01.2010 DE 102010006283
(43) Veröffentlichungstag der Anmeldung: 05.12.2012
(73) Patentinhaber: Volkswagen Aktiengesellschaft, 38440 Wolfsburg (DE)
(72) Erfinder: WICHERT, Volker, 38440 Wolfsburg (DE); STORZ, Eugen, 38444 Wolfsburg (DE); WIESÄBEL, Dirk, 39646 Oebisfelde (DE)
(86) Internationale Anmeldenummer: PCT/EP2011/000266
(87) Internationale Veröffentlichungsnummer: WO 2011/091971

(56) Entgegenhaltungen:
- EP-A2- 1 352 810
- WO-A1-2006/008150
- DE-A1- 4 218 415
- JP-A- 2008 049 735

## Beschreibung

Die Erfindung betrifft einen Vorderwagen eines Fahrzeugs, insbesondere eines Kraftfahrzeugs, mit einer Stoßfängeranordnung nach dem Oberbegriff des Patentanspruchs 1 der Erfindung.

Stoßfängeranordnungen im Vorderwagen von Fahrzeugen, insbesondere Kraftfahrzeugen, sind in den unterschiedlichsten Ausführungsformen bekannt. Diese setzen sich überwiegend aus einem Stoßfängerquerträger, einer Stoßfängerverkleidung mit Kühlluftöffnungen zur Versorgung in Luftströmungsrichtung gesehen nachgeordneter Aggregate, wie insbesondere eine Kühleranordnung und ein Antriebsaggregat, mit Kühlluft, und einer zwischen Stoßfängerquerträger und Stoßfängerverkleidung angeordneten Fußgängerschutzvorrichtung zusammen. So beschreibt die WO 02/074570 A1 einen Vorderwagen respektive einen Kraftwagenbug mit einem vorderen Stoßfänger, welcher durch einen Querträger gebildet ist, der seinerseits über einen Pralltopf an einem Tragbauteil des Kraftfahrzeugs angeschlossen ist. An der vorderen Stirnseite eines als Zweikammerhohlprofil ausgebildeten Querträgers ist eine Fußgängerschutzvorrichtung in Form eines Prallschaumteils befestigt, welches sich über nahezu die gesamte Fahrzeugbreite erstreckt und an einem den Vorderwagen bzw. Kraftwagenbug nach vorn abschließenden Stoßfängerverkleidung angeschlossen ist. Das Prallschaumteil weist einen u-förmigen Querschnitt auf. Unterhalb und oberhalb des vorderen Stoßfängers sind Kühlluftöffnungen in der Stoßfängerverkleidung vorgesehen. Unterhalb der unteren Kühlluftöffnungen ist ferner ein separates Luftführungsteil angeordnet, welches über ein Auffahrschutzelement an dem vorderen Ende eines Längsträgerabschnitts befestigt ist. Ein zum vorbeschriebenen Vorderwagen eines Kraftfahrzeugs ähnlicher Vorderwagen ist auch der KR 20020089000 A zu entnehmen.

Des Weiteren ist aus der DE 10 2005 009 768 A1 eine Karosseriefrontstruktur mit einer Fußgängerschutzeinrichtung bekannt, welche einen ein Prallelement aus einem stoßabsorbierenden Material haltenden Querträger aufweist. In Fahrzeuglängsrichtung nach hinten gesehen ist hinter dem Querträger eine Kühleranordnung mit einem Wärmetauscher für die Motorkühlung angeordnet, vor dem sich wiederum ein Luftleitteil befindet. Besagtes Luftleitteil in Gestalt eines Luftleitkastens ist am Querträger der Fußgängerschutzeinrichtung angeordnet und bildet mit demselben eine bauliche respektive einstückige Einheit.

In DE 42 18 415 A1 ist eine vordere Stoßstange für ein Kraftfahrzeug beschrieben, in welcher untere Öffnungen vorgesehen sind, um Luft unterhalb eines Stoßfängerquerträgers zu einer Kühleinrichtung zu führen, und entlang eines Randes einer Vertiefung zur Aufnahme eines Nummernschildes eine obere Öffnung vorgesehen ist, um Luft oberhalb eines Stoßfängerquerträgers zu einer Kühleinrichtung zu führen.

Aus JP 2008049735 A ist eine vordere Stoßstange für ein Kraftfahrzeug bekannt, in welcher Öffnungen vorgesehen sind, durch welche Luft oberhalb und unterhalb eines Stoßfängerquerträgers zu einer hinter dem Stoßfängerquerträger angeordneten Kühleinrichtung geführt wird.

In EP 1 352 810 A2 ist ein Vorderwagen mit einer Fußgängerschutzeinrichtung beschrieben und gezeigt, der zwischen einer Stoßfängerverkleidung und der Fußgängerschutzeinrichtung unterhalb der Fußgängerschutzeinrichtung eine Öffnung aufweist, durch welche Luft von einem Freiraum unterhalb der Fußgängerschutzeinrichtung vor dieser nach oben und anschließend in Fahrzeuglängsrichtung zu einer hinter der Fußgängerschutzeinrichtung angeordneten Kühlereinrichtung strömen kann.

Aus WO 2006/008150 A1 ist ein Vorderwagen gemäß dem Oberbegriff des Anspruchs 1 bekannt.

Die vorstehend beschriebenen Lösungen mögen zwar bereits eine bestimmte Kühlluftzufuhr zu nachgeordneten Aggregaten, insbesondere auch zu einer Kühleranordnung bewirken, jedoch bergen dieselben noch Verbesserungspotential dahingehend, dass der Abschnitt der Kühleranordnung, der hinter dem Stoßfängerquerträger samt Fußgängerschutzvorrichtung und/oder im Strömungsschatten derselben angeordnet ist, herkömmlich noch nicht effektiv genug, d. h., direkt von einem Kühlluftstrom erreichbar ist.

Aufgabe der Erfindung ist es, unter Beibehaltung der Vorteile eines Vorderwagens eines Fahrzeugs, insbesondere eines Kraftfahrzeugs, mit einer Stoßfängeranordnung, die sich zumindest aus einem Stoßfängerquerträger, einer Stoßfängerverkleidung und einer zwischen Stoßfängerquerträger und Stoßfängerverkleidung angeordneten Fußgängerschutzvorrichtung zusammensetzt, dahingehend weiter zu verbessern, dass eine effektive Kühlluftzufuhr auch zu einem Abschnitt der Kühleranordnung gestattet ist, der in Fahrzeuglängsrichtung nach hinten gesehen hinter dem Stoßfängerquerträger samt Fußgängerschutzvorrichtung und/oder im Strömungsschatten derselben angeordnet ist.

Ausgehend von einem Vorderwagen eines Fahrzeugs, insbesondere eines Kraftfahrzeugs, mit einer Stoßfängeranordnung, die sich ihrerseits zumindest aus einem Stoßfängerquerträger, einer Stoßfängerverkleidung und einer zwischen Stoßfängerquerträger und Stoßfängerverkleidung angeordneten Fußgängerschutzvorrichtung zusammensetzt, und mit einer entgegen der Fahrtrichtung gesehen hinter der Stoßfängeranordnung angeordneten Kühleranordnung, wobei zumindest unterhalb der Fußgängerschutzvorrichtung eine oder mehrere Kühlluftöffnungen in der Stoßfängerverkleidung vorgesehen sind, um einen oder mehrere Kühlluftströme durch einen unteren Freiraum unterhalb der Fußgängerschutzvorrichtung im Vorderwagen hindurch nach hinten zur Kühleranordnung zu leiten, wird die gestellte Aufgabe dadurch gelöst, dass die Fußgängerschutzvorrichtung derart angeordnet und ausgebildet ist, dass ausgehend von einer oder mehreren unteren Kühlluftöffnungen, die unterhalb des Stoßfängerquerträgers angeordnet sind, und/oder vom unteren Freiraum des Vorderwagens zumindest ein Kühlluftstrom, einen Bypass realisierend, zwischen der Stoßfängerverkleidung und der Fußgängerschutzvorrichtung oder durch eine Bohrung in derselben hindurch zu einem oberen Freiraum im Vorderwagen oberhalb der Fußgängerschutzvorrichtung geführt ist und/oder nach hinten zu einem Abschnitt der Kühleranordnung geführt ist, der hinter dem Stoßfängerquerträger samt Fußgängerschutzvorrichtung und/oder im Hinblick auf besagte Kühlluftströme im Strömungsschatten des Stoßfängerquerträgers samt Fußgängerschutzvorrichtung angeordnet ist. Dabei ist in der Fußgängerschutzvorrichtung wenigstens ein als Bypass den zumindest einen Kühlluftstrom zwischen der Stoßfängerverkleidung und der Fußgängerschutzvorrichtung führender Strömungskanal mit zumindest einem Kanaleingang und zumindest einem Kanalausgang ausgebildet. Darüber hinaus ist dem zumindest einen Kanaleingang des wenigstens einen Strömungskanals zumindest ein Luftleitelement zugeordnet, um den Strömungskanal definiert mit Kühlluft zu beaufschlagen. Das zumindest eine Luftleitelement kann dabei einstückig mit der Fußgängerschutzvorrichtung oder auch als Anbauteil ausgebildet sein.

Als im Strömungsschatten des Stoßfängerquerträgers samt Fußgängerschutzvorrichtung angeordneter Abschnitt wird somit der Abschnitt der Kühleranordnung verstanden, der seinerseits herkömmlich nicht hoch effektiv direkt von Kühlluftströmen, sondern überwiegend durch Luftverwirbelungen derselben im Vorderwagen mit gemindertem Kühleffekt beaufschlagt wird. In Bezug auf den Stand der Technik ist durch diese Maßnahme eine verbesserte Kühlung insbesondere dieses Abschnittes der Kühleranordnung zu verzeichnen, da ein oder mehrere Kühlluftströme von den Kühlluftöffnungen ausgehend weitestgehend definiert auf direktem Wege zu besagtem Abschnitt der Kühleranordnung geführt werden und somit hoch effektiv kühlend wirken können.

Die Unteransprüche beschreiben bevorzugte Weiterbildungen oder Ausgestaltungen der Erfindung.

Danach kann die Fußgängerschutzvorrichtung als ein im Querschnitt den Stoßfängerquerträger zumindest abschnittsweise übergreifendes und nach hinten offenes U-Profil ausgebildet sein, wodurch äußerst einfach und kostengünstig die Abstützung der Fußgängerschutzvorrichtung am Stoßfängerquerträger in Fahrzeughoch- and -längsrichtung (Z-, X-Richtung) bewerkstelligt ist.

Vorteilhaft kann der wenigstens eine Strömungskanal durch eine nutenförmige Ausnehmung in der Oberflächenkontur der Fußgängerschutzvorrichtung oder durch eine Sickenstruktur derselben gebildet sein, welche einfach und kostengünstig bereits während der Herstellung der Fußgängerschutzvorrichtung Berücksichtigung finden können.

Wie die Erfindung noch vorsieht, kann der zumindest eine Kanalausgang des wenigstens einen Strömungskanals, eine Umlenkung des Kühlluftstroms nach hinten zur Kühleranordnung bewirkend, zu derselben hin ausgerichtet sein. Insoweit kann es sich auch anbieten, dass besagter Kanalausgang einen trichterförmigen Querschnitt aufweist, der sich von vorn nach hinten vergrößert, wodurch eine Verteilung des Luftstroms auf eine größere Fläche der Kühleranordnung bei ggf. gewünschter definierter Verringerung der Strömungsgeschwindigkeit des betreffenden Kühlluftstroms gestattet ist.

Schließlich kann vorteilhaft vorgesehen sein, dass die Fußgängerschutzvorrichtung aus einem stoßabsorbierenden Material besteht und/oder durch eine an sich bekannte Aufprallenergie absorbierende Struktur gebildet ist, um im Falle eines etwaigen frontalen Anstoßes eines Fußgängers am Vorderwagen Körperschäden des Fußgängers zu verhindern, zumindest jedoch maßgeblich zu mindern.

Die Erfindung wird nachstehend anhand eines in den Zeichnungen schematisch dargestellten Ausführungsbeispieles näher erläutert. Es zeigen:
- Fig. 1: eine Schnittdarstellung eines erfindungsgemäß ausgebildeten Vorderwagens eines Kraftfahrzeugs,
- Fig. 2: die perspektivische Darstellung einer erfindungswesentlichen Fußgängerschutzvorrichtung,
- Fig. 3: den Schnitt I-I nach Fig. 2, und
- Fig. 4: den Vorderwagen nach Fig. 1 mit der Darstellung der Strömungsverhältnisse der Kühlluft im Betrieb des Fahrzeugs.

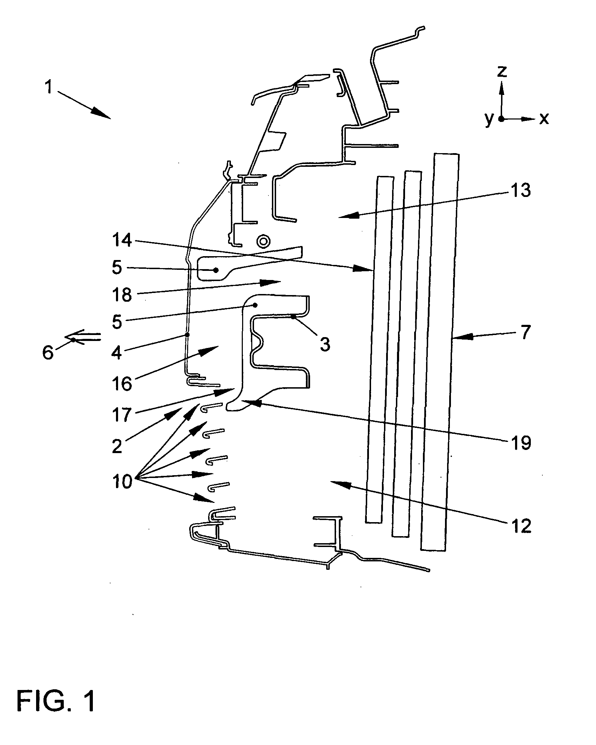

Fig. 1 zeigt den Vorderwagen 1 eines Kraftfahrzeugs im Längsschnitt mit einer Stoßfängeranordnung 2, die sich zumindest aus einem Stoßfängerquerträger 3, einer Stoßfängerverkleidung 4 und einer zwischen Stoßfängerquerträger 3 und Stoßfängerverkleidung 4 angeordneten Fußgängerschutzvorrichtung 5 zusammensetzt. Vorliegend schließt besagte Fußgängerschutzvorrichtung 5 an der Stoßfängerverkleidung 4 weitestgehend an oder ist geringfügig beabstandet zu derselben angeordnet..

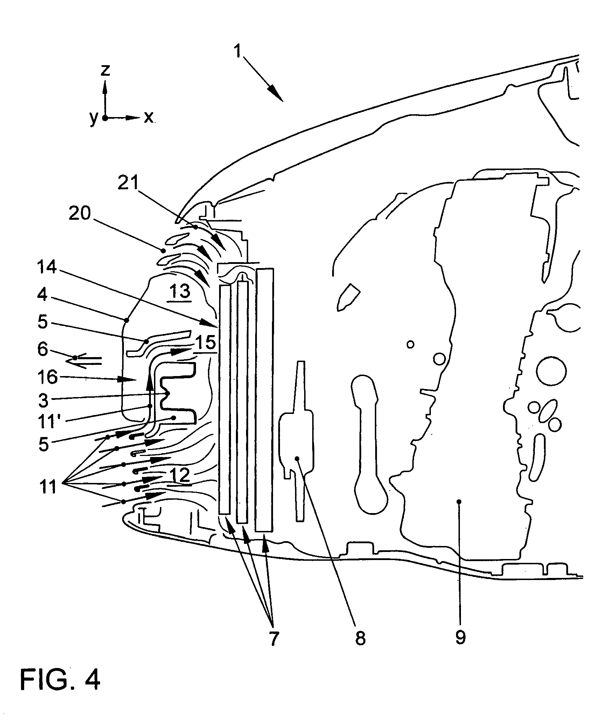

Entgegen der Fahrtrichtung (Richtungspfeil 6) gesehen hinter der Stoßfängeranordnung 2 ist eine an sich bekannte Kühleranordnung 7 in Form eines Wasserkühlers angeordnet, an den sich gemäß Fig. 4 ein an sich bekannter Lüfter 8 sowie ein an sich bekanntes Antriebsaggregat 9, insbesondere eine Verbrennungskraftmaschine, anschließen.

Die Fußgängerschutzvorrichtung 5 besteht ihrerseits aus einem stoßabsorbierenden Material, vorzugsweise einem geeigneten stoßabsorbierenden Kunststoff- oder Metallschaum und verfügt über einen u-profil-förmigen Querschnitt, welcher im montierten Zustand zumindest abschnittsweise den Stoßfängerquerträger 3 übergreift.

Unterhalb der Fußgängerschutzvorrichtung 5 sind vorliegend eine Mehrzahl Kühlluftöffnungen 10 in der Stoßfängerverkleidung 4 vorgesehen, um ein Mehrzahl Kühlluftströme 11 durch einen unteren Freiraum 12 im Vorderwagen 1 hindurch nach hinten insbesondere zur Kühleranordnung 7 zu leiten.

Wie den Fig. 1 und 4 weiter zu entnehmen, ist die Fußgängerschutzvorrichtung 5 hierbei derart angeordnet und ausgebildet, dass ausgehend von einer unteren Kühlluftöffnung 10 in der Stoßfängerverkleidung 4 respektive vom unteren Freiraum 12 des Vorderwagens 1 zumindest ein Kühlluftstrom 11' zwischen der Stoßfängerverkleidung 4 und der Fußgängerschutzvorrichtung 5 hindurch zu einem oberen Freiraum 13 des Vorderwagens 1 respektive nach hinten zu einen Abschnitt 14 der Kühleranordnung 7 geführt ist, der hinter dem Stoßfängerquerträger 3 samt Fußgängerschutzvorrichtung 5 und/oder im Hinblick auf besagte Kühlluftströme 11 im Strömungsschatten 15 des Stoßfängerquerträgers 3 samt Fußgängerschutzvorrichtung 5 angeordnet ist. Es ist somit ein sogenannter Bypass 16 geschaffen, der seinerseits auf annähernd direktem Weg einen Kühlluftstrom 11' zu herkömmlich kritischen Abschnitten 14 der Kühleranordnung 7 führt.

Wie bereits oben dargetan, wird hierbei als im Strömungsschatten 15 des Stoßfängerquerträgers 3 samt Fußgängerschutzvorrichtung 5 angeordneter Abschnitt 14 der Abschnitt 14 der Kühleranordnung 7 verstanden, der seinerseits herkömmlich nicht hoch effektiv direkt von Kühlluftströmen 11, sondern überwiegend durch Luftverwirbelungen derselben im Vorderwagen 1 mit gemindertem Kühleffekt beaufschlagt wird.

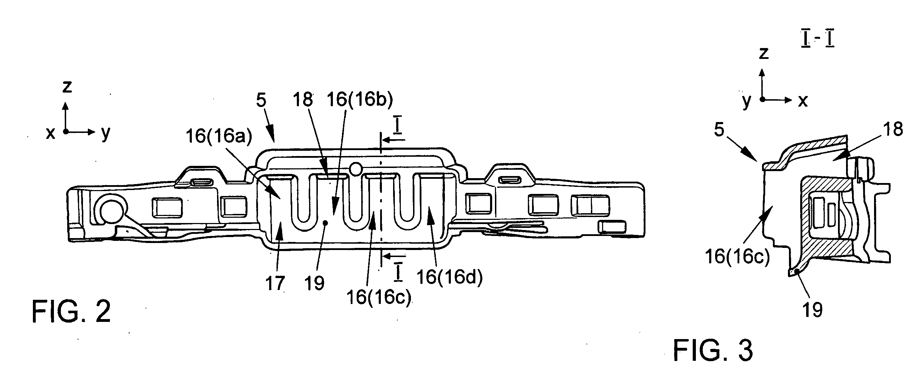

Gemäß den Fig. 2 und 3 ist besagter Bypass 16 durch eine Mehrzahl zwischen der Stoßfängerverkleidung 4 und der Fußgängerschutzvorrichtung 5 und in Fahrzeugquerrichtung (Y-Richtung) gesehen nebeneinander angeordnete Strömungskanäle 16a-d in der Fußgängerschutzvorrichtung 5 realisiert, welche vorliegend jeweils einen Kanaleingang 17 und einen Kanalausgang 18 aufweisen.

Sicherlich ist es auch denkbar und demgemäß durch die Erfindung mit erfasst, den Strömungskanälen 16a-d einen gemeinsamen Kanaleingang 17 und/oder einen gemeinsamen Kanalausgang 18 zuzuordnen oder einen einzigen Strömungskanal 16a mit einem Kanaleingang 17 und einem Kanalausgang 18 oder mit einer Mehrzahl Kanaleingängen 17 und/oder Kanalausgängen 18 vorzusehen (nicht näher dargestellt).

Die Strömungskanäle 16a-d sind vorliegend durch nutenförmige Ausnehmungen in der zur Stoßfängerverkleidung 4 hin weisenden und an die Stoßfängerverkleidung 4 sich anlehnende Oberflächenkontur der Fußgängerschutzvorrichtung 5 gebildet (vgl. Fig. 2 und 3). Demgegenüber kann es auch angezeigt sein, besagte Strömungskanäle 16a-d durch eine geeignete Sickenstruktur der Fußgängerschutzvorrichtung 5 auszubilden (nicht näher dargestellt).

Die Kanaleingänge 17 sind, wie bereits oben angedeutet, vorliegend im Bereich einer unteren, denselben nächstliegenden Kühlluftöffnung 10 bzw. im unteren Freiraum 12 des Vorderwagens 1 angeordnet und weisen ein gemeinsames Luftleitelement 19 auf, welches sich in Fahrzeugquerrichtung (Y-Richtung) erstreckt und zur Stoßfängerverkleidung 4 hin abgewinkelt ist.

Vorteilhaft ist besagtes Luftleitelement 19 einstückig mit der Fußgängerschutzvorrichtung 5 ausgebildet und besteht ebenfalls aus einem Schaumstoff oder aus einem bei der Herstellung einer Fußgängerschutzvorrichtung 5 aus Schaumstoff mit derselben stoff- und/oder formschlüssig verbundenen Einbauteil. Überdies kann es auch von Vorteil sein, das Luftleitelement 19 als separat hergestelltes und an der Fußgängerschutzvorrichtung befestigtes Anbauteil auszubilden (nicht näher dargestellt

Was den Kanalausgang 18 eines jeden Strömungskanals 16a-d anbelangt, ist derselbe, jeweils eine Umlenkung des Kühlluftstroms 11' nach hinten zur Kühleranordnung 7 bewirkend, zu derselben hin ausgerichtet, indem der Kanalausgang 18 über den Stößfängerquerträger 3 hinweg nach hinten geführt ist und an einer hinteren Stirnwand der Fußgängerschutzvorrichtung 5 endet (vgl. insbes. Fig. 1 und 4). Denkbar ist es jedoch auch, den Kanalausgang 18 lediglich im Bereich des oberen Freiraums 14 des Vorderwagens 1 enden zu lassen (nicht näher dargestellt).

Vorteilhaft verfügt besagter Kanalausgang 18 über einen trichterförmigen Querschnitt, der sich in Strömungsrichtung des Kühlluftstroms 11' innerhalb des Kanalausgangs 18 gesehen, von vorn nach hinten vergrößert.

Nachfolgend wird die Erfindung anhand der Fig. 4 in ihrer Funktion näher beschrieben.

Gesetzt den Fall, das Fahrzeug, insbesondere Kraftfahrzeug, bewegt sich gemäß dem Richtungspfeil 6 vorwärts, so sind durch die Kühlluftöffnungen 10 hindurch Kühlluftströme 11 von Fahrzeug-außen nach Fahrzeug-innen zu verzeichnen.

Ein Teil besagter Kühlluftströme 11 wird durch den unteren Freiraum 12 im Vorderwagen 1 des Fahrzeugs, insbesondere Kraftfahrzeugs, hindurch nach hinten geleitet und trifft auf die nachgeordnete Kühleranordnung 7.

Wie der Fig. 4 im Detail zu entnehmen ist, treffen diese Kühlluftströme 11 jedoch nicht effektiv genug die gesamte Oberfläche der Kühleranordnung 7, sondern es sind bestimmte Abschnitte 14 der Kühleranordnung 7 zu verzeichnen, die sozusagen im Strömungsschatten 15 des Stoßfängerquerträgers 3 samt Fußgängerschutzvorrichtung 5 liegen.

Zwar sind gemäß Fig. 4 oberhalb der Fußgängerschutzvorrichtung 5 weitere Kühlluftöffnungen 20 in der Stoßfängerverkleidung 4 für den Durchtritt von Kühlluftströmen 21 vorgesehen, jedoch reichen auch diese noch nicht aus, die Kühlung der in Rede stehenden Abschnitte 14 der Kühleranordnung 7 maßgeblich zu verbessern.

Um diesem Umstand zu begegnen, ist sozusagen ein Bypass 16 zwischen der Stoßfängerverkleidung 4 und der Fußgängerschutzvorrichtung 5 geschaffen, der es gestattet, einen oder mehrere Kühlluftströme 11' um den Stoßfängerquerträger 3 herum zum herkömmlich noch nicht ausreichend gekühlten Abschnitt 14 der Kühleranordnung 7 zu leiten.

Das oben näher beschriebene Ausführungsbeispiel stellt im Wesentlichen auf einen oder mehrere Strömungskanäle 16a-d ab, die sich einfach und kostengünstig an der Fußgängerschutzvorrichtung 5 ausbilden lassen. Ungeachtet dessen kann es sich auch anbieten, statt eines oder mehrerer derartiger Strömungskanäle 16a-d eine oder mehrere nicht näher gezeigte Bohrungen in der Fußgängerschutzvorrichtungen 5 vorzusehen, vermittels derer besagter Bypass 16 geschaffen wird. Ebenso kann es sich auch als vorteilhaft erweisen, die Fußgängerschutzvorrichtung 5 statt aus stoßabsorbierenden Schaummaterial herzustellen, durch eine an sich bekannte Stoßenergie absorbierende Struktur, beispielsweise aus Metallblech oder einem Kunststoff auszubilden.

### Bezugszeichenliste

- 1: Vorderwagen
- 2: Stoßfängeranordnung
- 3: Stoßfängerquerträger
- 4: Stoßfängerverkleidung
- 5 .: Fußgängerschutzvorrichtung
- 6: Richtungspfeil (Fahrtrichtung-Vorwärtsfahrt)
- 7: Kühleranordnung
- 8: Lüfter
- 9: Antriebsaggregat
- 10: Kühlluftöffnungen
- 11: Kühlluftströme
- 11': Kühlluftstrom
- 12: unterer Freiraum
- 13: oberer Freiraum
- 14: Abschnitt (Kühleranordnung 7)
- 15: Strömungsschatten
- 16: Bypass
- 16a-d: Strömungskanäle (Bypass 16)
- 17: Kanaleingang
- 18: Kanalausgang
- 19: Luftleitelement
- 20: Kühlluftöffnungen
- 21: Kühlluftströme

## Patentansprüche

1. Vorderwagen (1) eines Fahrzeugs, insbesondere eines Kraftfahrzeugs, mit einer Stoßfängeranordnung (2), die sich ihrerseits zumindest aus einem Stoßfängerquerträger (3), einer Stoßfängerverkleidung (4) und einer zwischen Stoßfängerquerträger (3) und Stoßfängerverkleidung (4) angeordneten Fußgängerschutzvorrichtung (5) zusammensetzt, und mit einer entgegen der Fahrtrichtung (6) gesehen hinter der Stoßfängeranordnung (2) angeordneten Kühleranordnung (7), wobei zumindest unterhalb der Fußgärigerschutzvorrichtung (5) eine oder mehrere Kühlluftöffnungen (10) in der Stoßfängerverkleidung (4) vorgesehen sind, um einen oder mehrere Kühlluftströme (11) durch einen unteren Freiraum (12) unterhalb der Fußgängerschutzvorrichtung (5) im Vorderwagen (1) hindurch nach hinten zur Kühleranordnung (7) zu leiten, wobei die Fußgängerschutzvorrichtung (5) derart angeordnet und ausgebildet ist, dass ausgehend von einer oder mehreren unteren Kühlluftöffnungen (10), die unterhalb des Stoßfängerquerträgers (3) angeordnet sind, und/oder vom unteren Freiraum (12) des Vorderwagens (1) zumindest ein Kühlluftstrom (11'), einen Bypass (16) realisierend,
a) zwischen der Stoßfängerverkleidung (4) und der Fußgängerschutzvorrichtung (5) oder durch eine Bohrung in derselben hindurch zu einem oberen Freiraum (13) im Vorderwagen (1) oberhalb der Fußgängerschutzvorrichtung (5) geführt ist und/oder
b) nach hinten zu einem Abschnitt (14) der Kühleranordnung (7) geführt ist, der hinter dem Stoßfängerquerträger (3) samt Fußgängerschutzvorrichtung (5) und/oder im Hinblick auf besagte Kühlluftströme (11) im Strömungsschatten des Stoßfängerquerträgers (3) samt Fußgängerschutzvorrichtung (5) angeordnet ist,
wobei in der Fußgängerschutzvorrichtung (5) wenigstens ein als Bypass (16) den zumindest einen Kühlluftstrom (11') zwischen der Stoßfängerverkleidung (4) und der Fußgängerschutzvorrichtung (5) führender Strömungskanal (16a-d) mit zumindest einem Kanaleingang (17) und zumindest einem Kanalausgang (18) ausgebildet ist,
**dadurch gekennzeichnet,**
**dass** dem zumindest einen Kanaleingang (17) des wenigstens einen Strömungskanals (16a-d) zumindest ein Luftleitelement (19) zugeordnet ist.

2. Vorderwagen (1) nach Anspruch 1, **dadurch gekennzeichnet, dass** die Fußgängerschutzvorrichtung (5) als ein im Querschnitt den Stoßfängerquerträger (3) zumindest abschnittsweise übergreifendes und nach hinten offenes U-Profil ausgebildet ist.

3. Vorderwagen (1) nach einem der Ansprüche 1 oder 2, **dadurch gekennzeichnet, dass** der wenigstens eine Strömungskanal (16a-d) durch eine nutenförmige Ausnehmung in der Oberflächenkontur der Fußgängerschutzvorrichtung (5) oder durch eine Sickenstruktur derselben gebildet ist.

4. Vorderwagen (1) nach einem der Ansprüche 1 bis 3, **dadurch gekennzeichnet, dass** das zumindest eine Luftleitelement (19) einstückig mit der Fußgängerschutzvorrichtung (5) oder als Anbauteil ausgebildet ist.

5. Vorderwagen (1) nach einem der Ansprüche 1 bis **4, dadurch gekennzeichnet, dass** der zumindest eine Kanalausgang (18) des wenigstens einen Strömungskanals (16a-d), eine Umlenkung des Kühlluftstroms (11') nach hinten zur Kühleranordnung (7) bewirkend, zu derselben hin ausgerichtet ist.

6. Vorderwagen (1) nach einem der Ansprüche 1 bis 5, **dadurch gekennzeichnet, dass** besagter Kanalausgang (18) einen trichterförmigen Querschnitt aufweist, der sich von vorn nach hinten vergrößert.

7. Vorderwagen (1) nach einem der Ansprüche 1 bis 6, **dadurch gekennzeichnet, dass** die Fußgängerschutzvorrichtung (5) aus einem stoßabsorbierenden Material besteht und/oder durch eine an sich bekannte Anstoßenergie absorbierende Struktur gebildet ist.

## Claims

1. Front end (1) of a vehicle, in particular of a motor vehicle, with a bumper arrangement (2) which, for its part, is composed at least of a bumper crossmember (3), a bumper cladding (4) and a pedestrian protection device (5) arranged between the bumper crossmember (3) and the bumper cladding (4), and with a radiator arrangement (7) which is arranged behind the bumper arrangement (2), as seen counter to the direction of travel (6), wherein one or more cooling air openings (10) are arranged in the bumper cladding (4) at least below the pedestrian protection device (5) in order to conduct one or more cooling air flows (11) through a lower clearance (12) below the pedestrian protection device (5) in the front end (1) rearwards to the radiator arrangement (7), wherein the pedestrian protection device (5) is arranged and designed in such a manner that, starting from one or more lower cooling air openings (10) which are arranged below the bumper crossmember (3) and/or from the lower clearance (12) of the front end (1), at least one cooling air flow (11'), in a manner realizing a bypass (16),
a) is guided between the bumper cladding (4) and the pedestrian protection device (5) or through a hole in same to an upper clearance (13) in the front end (1) above the pedestrian protection device (5), and/or
b) is guided rearwards to a section (14) of the radiator arrangement (7), which section is arranged together with the pedestrian protection device (5) behind the bumper crossmember (3), and/or, with respect to said cooling air flows (11), is arranged together with the pedestrian protection device (5) in the flow shadow of the bumper crossmember (3),
wherein at least one flow duct (16a-d) which, as a bypass (16), guides the at least one cooling air flow (11') between the bumper cladding (4) and the pedestrian protection device (5) and has at least one duct inlet (17) and at least one duct outlet (18) is formed in the pedestrian protection device (5), **characterized in that**
at least one air-guiding element (19) is assigned to the at least one duct inlet (17) of the at least one flow duct (16a-d).

2. Front end (1) according to Claim 1, **characterized in that** the pedestrian protection device (5) is designed as a rearwardly open U profile which, in cross section, engages at least partially over the bumper crossmember (3).

3. Front end (1) according to either of Claims 1 and 2, **characterized in that** the at least one flow duct (16a-d) is formed by a groove-shaped recess in the surface contour of the pedestrian protection device (5) or by a bead structure of same.

4. Front end (1) according to one of Claims 1 to 3, **characterized in that** the at least one air-guiding element (19) is formed integrally with the pedestrian protection device (5) or as an add-on part.

5. Front end (1) according to one of Claims 1 to 4, **characterized in that** the at least one duct outlet (18) of the at least one flow duct (16a-d) is oriented towards the radiator arrangement (7) in a manner bringing about a deflection of the cooling air flow (11') rearwards towards same.

6. Front end (1) according to one of Claims 1 to 5, **characterized in that** said duct outlet (18) has a funnel-shaped cross section which increases from the front to the rear.

7. Front end (1) according to one of Claims 1 to 6, **characterized in that** the pedestrian protection device (5) is composed of a shock-absorbing material and/or is formed by an impact-energy-absorbing structure which is known per se.

## Revendications

1. Partie avant (1) d'un véhicule, en particulier d'un véhicule automobile, comprenant un agencement de pare-chocs (2) qui se compose pour sa part au moins d'une traverse de pare-chocs (3), d'un habillage de pare-chocs (4) et d'un dispositif de protection des piétons (5) disposé entre la traverse de pare-chocs (3) et l'habillage de pare-chocs (4), et comprenant un agencement de radiateur (7) disposé derrière l'agencement de pare-chocs (2) vu dans le sens inverse au sens de conduite (6), une ou plusieurs ouvertures d'air de refroidissement (10) étant prévues dans l'habillage de pare-chocs (4) au moins en dessous du dispositif de protection des piétons (5), afin de guider un ou plusieurs flux d'air de refroidissement (11) à travers un espace libre inférieur (12) en dessous du dispositif de protection des piétons (5) dans la partie avant (1) vers l'arrière jusqu'à l'agencement de radiateur (7), le dispositif de protection des piétons (5) étant disposé et réalisé de telle sorte qu'au moins un flux d'air de refroidissement (11') réalisant une dérivation (16) soit, à partir d'une ou de plusieurs ouvertures d'air de refroidissement inférieures (10) qui sont disposées en dessous de la traverse de pare-chocs (3) et/ou à partir de l'espace libre inférieur (12) de la partie avant (1),
a) guidé entre l'habillage de pare-chocs (4) et le dispositif de protection des piétons (5) ou à travers un alésage dans celui-ci jusqu'à un espace libre supérieur (13) dans la partie avant (1) au-dessus du dispositif de protection des piétons (5) et/ou
b) guidé vers l'arrière jusqu'à une portion (14) de l'agencement de radiateur (7) qui est disposée derrière la traverse de pare-chocs (3), y compris le dispositif de protection des piétons (5), et/ou disposée, par rapport auxdits flux d'air de refroidissement (11), dans la zone morte d'écoulement de la traverse de pare-chocs (3), y compris le dispositif de protection des piétons (5),
au moins un canal d'écoulement (16a-d) comprenant au moins une entrée de canal (17) et au moins une sortie de canal (18) et guidant, en tant que dérivation (16), l'au moins un flux d'air de refroidissement (11') entre l'habillage de pare-chocs (4) et le dispositif de protection des piétons (5) étant réalisé dans le dispositif de protection des piétons (5),
**caractérisée**
**en ce qu'**au moins un élément de guidage d'air (19) est associé à l'au moins une entrée de canal (17) de l'au moins un canal d'écoulement (16a-d).

2. Partie avant (1) selon la revendication 1, **caractérisée en ce que** le dispositif de protection des piétons (5) est réalisé sous forme de profilé en U recouvrant au moins en partie la traverse de pare-chocs (3) en section transversale et ouvert vers l'arrière.

3. Partie avant (1) selon l'une quelconque des revendications 1 et 2, **caractérisée en ce que** l'au moins un canal d'écoulement (16a-d) est formé par un évidement en forme de rainure dans le contour de surface du dispositif de protection des piétons (5) ou par une structure à moulures de celui-ci.

4. Partie avant (1) selon l'une quelconque des revendications 1 à 3, **caractérisée en ce que** l'au moins un élément de guidage d'air (19) est réalisé d'un seul tenant avec le dispositif de protection des piétons (5) ou sous forme de composant rapporté.

5. Partie avant (1) selon l'une quelconque des revendications 1 à 4, **caractérisée en ce que** l'au moins une sortie de canal (18) de l'au moins un canal d'écoulement (16a-d) est disposée en direction de l'agencement de radiateur, en provoquant une déviation du flux d'air de refroidissement (11') vers l'arrière jusqu'à l'agencement de radiateur (7).

6. Partie avant (1) selon l'une quelconque des revendications 1 à 5, **caractérisée en ce que** ladite sortie de canal (18) présente une section transversale en forme d'entonnoir qui s'agrandit de l'avant vers l'arrière.

7. Partie avant (1) selon l'une quelconque des revendications 1 à 6, **caractérisée en ce que** le dispositif de protection des piétons (5) est constitué d'un matériau amortissant les chocs et/ou est formé par une structure connue en soi absorbant l'énergie d'impact.
